# FASCICULE DE BREVET EUROPEEN

(11) **EP 4 259 915 B1**
(45) Date de publication et mention de la délivrance du brevet: **25.06.2025**
(21) Numéro de dépôt: 21840092.7
(22) Date de dépôt: 07.12.2021
(51) Int. Cl.: F02C 7/14

(54) **ÉCHANGEUR DE CHALEUR MONTÉ DANS UNE CAVITÉ D'UNE TURBOMACHINE**
IN EINEM HOHLRAUM EINES TURBINENMOTORS MONTIERTER WÄRMETAUSCHER
HEAT EXCHANGER MOUNTED IN A TURBINE ENGINE CAVITY

(30) Priorité: 11.12.2020 FR 2013107
(43) Date de publication de la demande: 18.10.2023
(73) Titulaire: SAFRAN AIRCRAFT ENGINES, 75015 Paris (FR)
(72) Inventeur: ORIOL, Sébastien, 77550 MOISSY-CRAMAYEL (FR); COTEREAU, Nicolas Vincent Pierre-Yves, 77550 MOISSY-CRAMAYEL (FR); BOUTALEB, Mohammed-Lamine, 77550 MOISSY-CRAMAYEL (FR)
(74) Mandataire: Gevers & Orès
(86) Numéro de dépôt international: PCT/FR2021/052226
(87) Numéro de publication internationale: WO 2022/123168

(56) Documents cités:
- EP-A1- 3 453 845
- EP-A2- 2 492 199
- US-A1- 2019 390 602

## Description

### Domaine de l'invention

La présente invention concerne le domaine général de l'aéronautique. Elle vise en particulier un système d'échange de chaleur comprenant un échangeur de chaleur qui est enterré dans une cavité d'une turbomachine. L'invention concernant également la turbomachine et le procédé de mise en œuvre du système d'échange de chaleur.

### Arrière-plan technique

Une turbomachine, notamment d'aéronef, comprend divers organes et/ou équipements devant être lubrifiés et/ou refroidis tels que des paliers à roulements et engrenages. La chaleur dégagée par ces composants, qui peut être très importante suivant la puissance de l'organe et/ou de l'équipement, est transportée par un fluide et évacuée vers des sources froides disponibles dans l'aéronef.

Il est connu d'équiper la turbomachine d'un ou de plusieurs échangeurs de chaleur pour réaliser l'échange de chaleur entre le fluide (typiquement de l'huile) et la source froide (air, carburant, etc.). Il existe différents types d'échangeurs de chaleur qui sont par exemple les échangeurs de chaleur carburant/huile généralement connus sous l'acronyme anglais FCOC pour « Fuel Cooled Oil Cooler » et les échangeurs de chaleur air/huile connus sous l'acronyme anglais ACOC pour « Air-Cooled Oil Cooler ». Ces derniers sont généralement installés en complément des échangeurs FCOC qui sont insuffisants face aux besoins grandissant en termes de refroidissement de fluide dans la turbomachine. Des exemples d'échangeurs de chaleur sont décrits dans les documents de brevet EP-A2-2492199, US-A1-2019/390602, et EP-A1-3453845.

La famille des échangeurs ACOC comprend également les échangeurs du type surfacique, connus sous l'acronyme SACOC pour « Surface Air-Cooled Oil Cooler », qui sont généralement agencés dans la veine secondaire de la turbomachine et qui utilisent le flux d'air secondaire pour refroidir l'huile circulant dans la turbomachine. Toutefois, les échangeurs de chaleur SACOC comportent généralement des ailettes qui perturbent de manière continue l'écoulement d'air et créent des pertes de charge supplémentaires dans la veine secondaire. Cela impacte la performance de la turbomachine ainsi que la consommation de carburant spécifique.

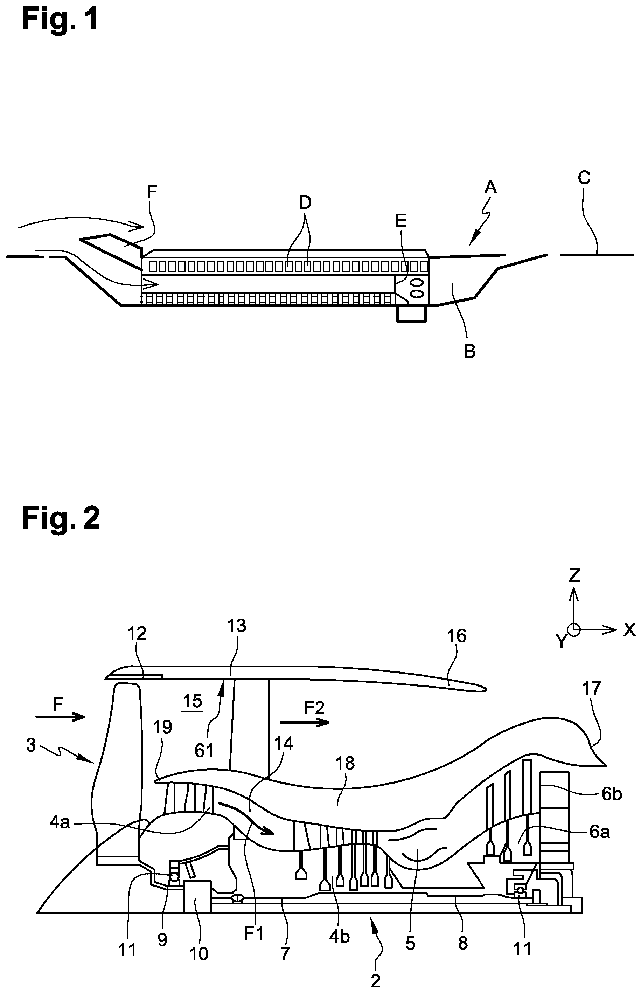

Afin de pallier ces inconvénients, certains échangeurs de chaleur sont enterrés dans un compartiment de la turbomachine. Comme cela est illustré sur la figure 1 de l'art antérieur, un échangeur de chaleur A est intégré dans une cavité B débouchant dans une paroi radialement interne C de la veine secondaire. Une partie du flux d'air secondaire, prélevée dans la veine secondaire, traverse l'échangeur de chaleur A enterré où celle-ci est réchauffée et est réinjectée dans la veine secondaire. L'échangeur A se présente sous la forme d'une pièce surfacique métallique permettant le passage d'huile dans des canaux D usinés et portant des ailettes E qui sont destinées à être traversées par le flux d'air secondaire. Une écope F pilotée, formée par exemple par un volet mobile pivotant et/ou déplaçable en translation, est disposée au niveau de l'entrée de la cavité B de manière à s'étendre dans la veine secondaire et de réaliser un débit d'air ajustable vers l'échangeur de chaleur A enterré. Un exemple de cet échangeur de chaleur est décrit dans la demande de brevet EP-A1-2472067.

Le volet mobile de l'écope F peut générer des pertes de charges dans la veine secondaire lorsque celui-ci ouvert. Le volet mobile est piloté de façon à se refermer lorsque le besoin d'échange thermique dans l'échangeur de chaleur enterré devient nul. Dans la position fermée du volet mobile, l'huile chaude continue de circuler à l'intérieur de l'échangeur de chaleur, réchauffant ainsi tout l'air emprisonné dans celui-ci (le flux d'air est quasi emprisonné si le volet mobile est en position fermée) et dans la cavité. Le flux d'air réchauffé est rejeté dans la veine secondaire. L'huile chaude circulant en continue peut diminuer la durée de vie de l'échangeur de chaleur et la performance de la turbomachine est dégradée. Un cyclage thermique est opéré à chaque vol même si l'échangeur de chaleur n'est pas utilisé pour refroidir l'huile.

Il existe donc un besoin de pallier les inconvénients précités.

### Résumé de l'invention

L'objectif de la présente invention est de fournir un système d'échange de chaleur permettant d'optimiser l'intégration d'un échangeur de chaleur dans une cavité et de réduire les pertes de charge tout en maintenant les performances de la turbomachine pendant toute la durée de fonctionnement de celle-ci.

Nous parvenons à cet objectif conformément à l'invention grâce à un système d'échange de chaleur pour une turbomachine d'aéronef comprenant :
- une cavité comprenant une entrée d'air,
- un échangeur de chaleur agencé dans la cavité, l'échangeur de chaleur comprenant un premier circuit dans lequel est apte à circuler un premier fluide fourni par un circuit d'alimentation en fluide,
- un volet mobile monté au niveau de l'entrée d'air et se déplaçant entre une position d'ouverture autorisant la circulation du flux d'air dans la cavité et une position de fermeture interdisant la circulation du flux d'air dans la cavité,
- un dispositif de contrôle comprenant au moins un organe mobile destiné à entraîner le déplacement du volet mobile ,
le dispositif de contrôle étant agencé dans le circuit d'alimentation en fluide de l'échangeur de chaleur, et étant configuré de manière à autoriser ou interdire la circulation du premier fluide vers l'échangeur de chaleur et à agir simultanément sur la position d'ouverture ou de fermeture du volet mobile .

Ainsi, cette solution permet d'atteindre l'objectif susmentionné. En particulier, le couplage de la position du volet mobile et de la position de l'organe mobile permet une adaptation aux différentes phases de vol de la turbomachine et de l'aéronef. L'utilisation de l'échangeur de chaleur dans certains cas de vol de la turbomachine permet d'augmenter sa durée de vie et éventuellement un gain en masse. En particulier, cette configuration permet d'éviter la surchauffe de la cavité dans laquelle est installé l'échangeur de chaleur, de diminuer le cyclane thermique de l'échangeur de chaleur et les pertes de charge.

Le système d'échange de chaleur comprend également l'une ou plusieurs des caractéristiques suivantes, prises seules ou en combinaison :
- le dispositif de contrôle est destiné à être relié d'une part à une conduite d'alimentation reliée au premier circuit de l'échangeur de chaleur et d'autre part à une conduite de dérivation qui contourne l'échangeur de chaleur, ladite conduite d'alimentation étant destinée être alimentée par le circuit d'alimentation lorsque le volet mobile occupe la position d'ouverture et ladite conduite de dérivation étant destinée être alimentée par le circuit d'alimentation lorsque le volet mobile occupe la position de fermeture.
- l'organe mobile se déplace entre :
   --une première position autorisant la circulation du premier fluide vers l'échangeur de chaleur et dans laquelle le volet mobile est dans la position d'ouverture, et
   --une deuxième position autorisant la circulation du premier fluide vers la conduite de dérivation et dans laquelle le volet mobile est dans la position de fermeture.
- le système d'échange de chaleur comprend des moyens de mesure d'au moins un paramètre déterminé du premier fluide en sortie de l'échangeur de chaleur, suivant le sens de circulation du premier fluide dans l'échangeur de chaleur, et qui sont aptes à être reliés à une unité électronique de commande, l'unité électronique de commande étant configurée de manière à piloter le passage d'une position à une autre de l'organe mobile en fonction du paramètre déterminé.
- le dispositif de contrôle comprend un corps pourvu d'un logement dans lequel débouche un premier orifice d'entrée, un deuxième orifice d'entrée, un premier orifice de sortie et un deuxième orifice de sortie, les premier et deuxième orifices d'entrée étant destinés à être reliés au circuit d'alimentation, le premier orifice de sortie étant destiné à être relié au premier circuit et le deuxième orifice de sortie étant destiné à être relié à la conduite de dérivation, l'organe mobile obturant le deuxième orifice de sortie dans la première position et obturant le premier orifice de sortie dans la deuxième position.
- l'organe mobile est apte à occuper au moins une position intermédiaire dans laquelle le premier fluide est apte à circuler vers l'échangeur de chaleur et vers la conduite de dérivation.
- le premier fluide comprend de l'huile.
- le paramètre déterminé du premier fluide est la température du premier fluide à la sortie de l'échangeur de chaleur.
- l'organe mobile comprend une tige d'actionnement articulée au volet mobile.

L'invention concerne également un module de turbomachine comprenant un compartiment annulaire autour de l'axe longitudinal X, un circuit d'alimentation en fluide et un système d'échange de chaleur présentant selon l'une quelconque des caractéristiques susmentionnées, le compartiment comportant une paroi annulaire qui guide au moins en partie un flux d'air et le système d'échange de chaleur étant agencé dans le compartiment annulaire et sur le circuit d'alimentation, l'entrée d'air de la cavité étant agencée dans la paroi annulaire de manière à être en communication fluidique avec le compartiment annulaire.

L'invention concerne également une turbomachine d'aéronef comprenant un module de turbomachine tel que susmentionné ou un système d'échange de chaleur tel que décrit ci-dessus.

L'invention concerne également un procédé de régulation de la circulation d'un premier fluide dans un échangeur de chaleur d'un système d'échange de chaleur pour une turbomachine, l'échangeur de chaleur étant agencé dans une cavité d'un compartiment de la turbomachine et la cavité étant apte à être balayée par un flux d'air, le procédé étant caractérisé en ce qu'il comprend :
- une étape de fourniture d'un premier fluide dans un circuit d'alimentation en fluide de la turbomachine,
- une étape d'agencement de l'échangeur de chaleur et d'un dispositif de contrôle sur le circuit d'alimentation,
- une étape de régulation de manière à, simultanément, autoriser ou interdire la circulation du flux d'air dans la cavité et la circulation du premier fluide vers l'échangeur de chaleur. Le procédé également l'une ou plusieurs des caractéristiques ou étapes suivantes, prises seules ou en combinaison :
- l'étape de régulation comprend :
   -- une sous étape de déplacement de l'organe mobile dans la première position pour autoriser la circulation de l'huile vers le premier circuit de l'échangeur de chaleur ou dans la deuxième position pour autoriser la circulation d'huile le conduit de dérivation,
   -- une sous étape d'actionnement du volet mobile dans une position d'ouverture autorisant la circulation du flux d'air dans la cavité et une position de fermeture interdisant la circulation du flux d'air dans la cavité, la position du volet mobile étant fonction de la position de l'organe mobile.
- une étape de mesure d'un paramètre déterminé du premier fluide et en ce que l'étape de déplacement est réalisée en fonction au moins de l'atteinte d'un seuil dudit paramètre prédéterminé.
- le paramètre déterminé mesuré est une température représentative de la température du premier fluide dans l'échangeur de chaleur, mesurée de façon continue ou discrète à intervalles réguliers, et en ce qu'à chaque mesure, l'étape de régulation effectue au moins l'une des étapes suivantes avant une mesure consécutive de la température :
   -- lorsque la température mesurée est inférieure à au moins un seuil de température consigne, l'organe mobile est piloté pour se déplacer dans la deuxième position de sorte à alimenter la conduite de dérivation avec le premier fluide,
   -- lorsque la température mesurée est égale audit seuil de température consigne, l'organe mobile est piloté pour se déplacer dans sa position précédente, et/ou
   -- lorsque la température mesurée est supérieure audit seuil de température consigne, l'organe mobile est piloté pour se déplacer dans la première position de sorte à alimenter la conduite d'alimentation avec le premier fluide vers l'échangeur de chaleur.

L'invention concerne également un aéronef comprenant un système d'échange de chaleur ou une turbomachine tel que décrit.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale d'un exemple d'échangeur de chaleur qui est monté dans une cavité d'une turbomachine selon l'art antérieur;
[Fig. 2] La figure 2 est une vue en perspective d'un exemple de turbomachine à laquelle s'applique l'invention ;
[Fig. 3] La figure 3 est une vue schématique et en coupe axiale d'un système d'échange de chaleur monté dans un module de turbomachine, le système d'échange de chaleur comprenant un échangeur de chaleur enterré selon l'invention ;
[Fig. 4] La figure 4 illustre de manière schématique un exemple de dispositif de contrôle destiné à agir sur un volet mobile et étant dans une position autorisant la circulation d'un fluide vers un échangeur de chaleur selon l'invention ;
[Fig. 5] La figure 5 illustre de manière schématique un exemple de dispositif de contrôle destiné à agir sur un volet mobile et étant dans une position interdisant la circulation d'un fluide dans un échangeur de chaleur selon l'invention ;
[Fig. 6] La figure 6 est une vue schématique d'un exemple de dispositif de contrôle permettant la circulation d'un fluide vers un échangeur de chaleur et vers une conduite de dérivation contournant l'échangeur de chaleur, le débit de fluide autorisé à circuler étant identique selon l'invention;
[Fig. 7] La figure 7 est un autre mode de réalisation d'un dispositif de contrôle permettant la circulation d'huile vers un échangeur de chaleur et vers une conduite de dérivation contournant l'échangeur de chaleur, le débit de fluide autorisé à circuler étant différent selon l'invention ; et
[Fig. 8] La figure 8 illustre les principales étapes d'un procédé de régulation d'un fluide dans un échangeur de chaleur installé dans une cavité d'un compartiment de la turbomachine selon l'invention.

### Description détaillée de l'invention

La figure 1 a été décrite dans ce qui précède.

La figure 2 montre une vue en coupe axiale d'une turbomachine 1 d'axe longitudinal X à laquelle s'applique l'invention. La turbomachine 1 représentée est une turbomachine double flux destinée à être montée sur un aéronef. Bien entendu, l'invention n'est pas limitée à ce type de turbomachine.

Dans la présente invention, les termes « amont » et « aval » sont définis par rapport à la circulation des gaz dans la turbomachine 1 et ici suivant l'axe longitudinal X et en référence à la figure 1 de gauche à droite. Les termes « radial », « interne » et « externe » sont définis par rapport à un axe radial Z perpendiculaire à l'axe longitudinal X et au regard de l'éloignement par rapport à l'axe longitudinal X. De même, une turbomachine se compose généralement de plusieurs modules qui sont fabriqués indépendamment les uns des autres et qui sont assemblés ensuite les uns aux autres de manière à faciliter son assemblage, son démontage ainsi que sa maintenance.

Cette turbomachine 1 double flux comprend de manière générale un générateur de gaz ou moteur à turbine à gaz 2 en amont duquel est montée une soufflante 3. Le générateur de gaz 2 comprend un ensemble de compresseur de gaz (comportant ici un compresseur basse pression 4a et un compresseur haute pression 4b), une chambre de combustion 5 et un ensemble de turbine (comportant ici une turbine haute pression 6a et une turbine basse pression 6b). Classiquement, la turbomachine comprend un arbre basse pression 7 qui relie le compresseur basse pression 4a et la turbine basse pression 6b pour former un corps basse pression et un arbre haute pression 8 qui relie le compresseur haute pression 4b et la turbine haute pression 6a pour former un corps haute pression. L'arbre basse pression 7, centré sur l'axe longitudinal, entraîne dans le présent exemple un arbre de soufflante 9. Un réducteur de vitesse 10 peut être interposé, comme ici, entre l'arbre de soufflante 9 et l'arbre basse pression 7. Des paliers de guidage 11 en rotation, en amont et en aval, permettent de guider en rotation l'arbre basse pression 7 par rapport à une structure fixe de la turbomachine.

La soufflante 3 est carénée par un carter de soufflante 12 portée par une nacelle 13 et génère un flux d'air primaire F1 qui circule à travers le générateur de gaz 2 dans une veine primaire 14 et un flux d'air secondaire F2 qui circule dans une veine secondaire 15 autour du générateur de gaz 2. Le flux d'air secondaire F2 est éjecté par une tuyère secondaire 16 terminant la nacelle 13 alors que le flux d'air primaire F1 est éjecté à l'extérieur de la turbomachine via une tuyère d'éjection 17 située en aval du générateur de gaz 2.

Les paliers de guidage 11 et le réducteur de vitesse 10 dans cet exemple de configuration de la turbomachine doivent être lubrifiés et/ ou refroidis pour assurer de bonnes performances de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. Bien entendu, d'autres équipements de la turbomachine génèrent beaucoup de chaleur devant être extraite de leur environnement.

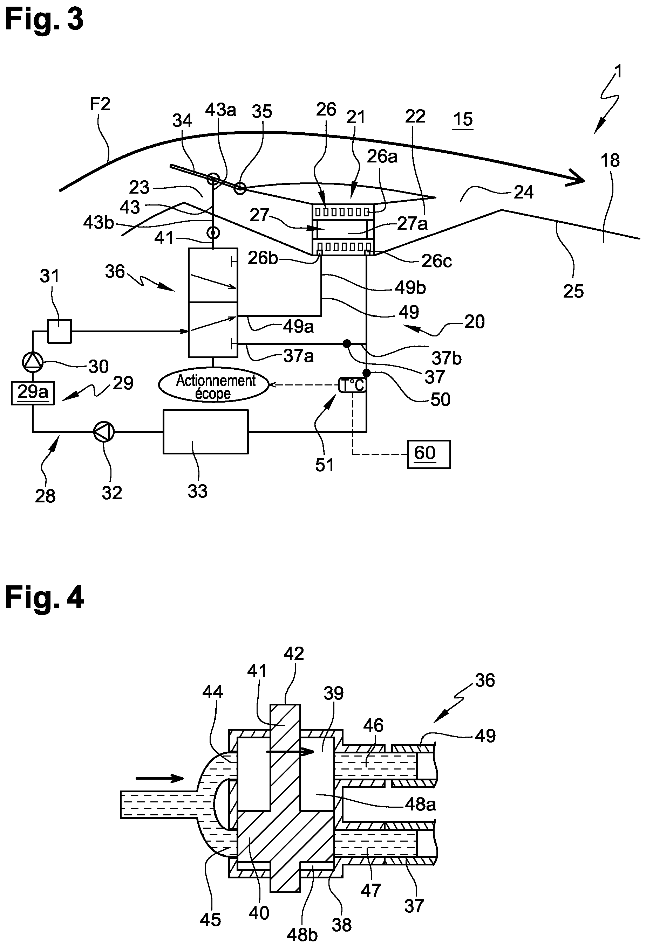

En référence aux figures 2 et 3, la turbomachine 1 comprend un système d'échange de chaleur 20 qui permet de refroidir le fluide destiné à lubrifier et/ou refroidir ces organes et/ou équipements. Le système d'échange de chaleur 20 comprend un échangeur de chaleur 21 représenté très schématiquement. L'échangeur de chaleur 21 est monté dans un compartiment dans lequel circule un flux d'air. Le compartiment peut être un carter inter-veine 18, le carter de soufflante 12 ou encore la nacelle 13. Le carter inter-veine 18 sépare la veine primaire 14 et la veine secondaire 15. Ce carter inter-veine 18 porte un bec de séparation 19 en amont et la tuyère d'éjection des gaz 17 en aval.

Sur la figure 3, l'échangeur de chaleur 21 est agencé dans une cavité 22, autour de l'axe longitudinal, qui est destinée à être traversée par un flux d'air, notamment le flux d'air secondaire F2. Dans le présent exemple, la cavité 22 est agencée dans le carter inter-veine 18. La cavité 22 comprend une entrée d'air 23 qui est en communication fluidique avec la veine secondaire 15. La cavité 22 comprend également une sortie d'air 24 qui est en communication fluidique avec la veine secondaire 15. Dans l'exemple représenté, l'entrée d'air 23, ainsi que la sortie d'air 24 sont formées dans une paroi radialement interne 25 du carter inter-veine 18. La paroi radialement interne 25 est destinée à guider au moins en partie le flux d'air secondaire F2 dans veine secondaire 15. La cavité 22 s'étend également sur un secteur angulaire, suivant une direction circonférentielle autour de l'axe longitudinal X, de l'ordre de 30°.

L'échangeur de chaleur 21 comprend un premier circuit 26 dans lequel un premier fluide est apte à circuler et un deuxième circuit 27 dans lequel un deuxième fluide est apte à circuler. Le premier fluide est une huile et le deuxième fluide est le flux d'air circulant dans la turbomachine et ici une partie du flux d'air secondaire prélevé dans la veine secondaire 15. Le flux d'air constitue la source froide destinée à refroidir l'huile chaude réchauffée par les organes/équipements de la turbomachine. L'échangeur de chaleur 21 est du type surfacique air/huile.

Plusieurs canaux d'huile 26a sont agencés dans l'épaisseur d'une paroi interne et d'une paroi externe suivant l'axe radial dans l'échangeur de chaleur 21. Ces canaux d'huile 26a communiquent entre eux et forment le premier circuit 26. Ce dernier comprend une entrée 26b et une sortie 26c. Le deuxième circuit 27 s'étend entre les parois interne et externe de l'échangeur de chaleur 21. Ces parois sont espacées radialement l'une de l'autre en formant un canal. Le flux d'air circule à travers le canal. Chacune des parois comprenant les canaux 26a est balayée par le flux d'air de manière à réaliser un échange avec celles-ci. L'échangeur de chaleur 21 peut comprendre une pluralité d'ailettes 27a s'étendant radialement chacune au moins depuis une des parois interne et externe. Les ailettes permettent d'augmenter la surface de contact avec le flux d'air secondaire pour extraire les calories.

L'échangeur de chaleur 21 est monté sur un circuit d'alimentation 28 en fluide (huile) de la turbomachine 1. Le circuit d'alimentation 28 d'huile comprend, de manière générale et suivant le sens d'écoulement de l'huile, une source d'huile 29, au moins une pompe d'alimentation 30 destinée à permettre la circulation d'huile dans le circuit d'alimentation 28 depuis la source d'huile 29, au moins un filtre 31, et au moins une pompe de recirculation 32. La source d'huile 29 comprend ici un réservoir 29a. L'échangeur de chaleur 21 est disposé typiquement en aval de la pompe d'alimentation 30 et aussi en amont des organes et/ou équipements à lubrifier et/ou refroidir. Ces derniers sont typiquement localisés dans des enceintes de lubrification 33. La pompe de recirculation 32 permet la recirculation de l'huile depuis les organes et/ou équipement vers le réservoir 29a. Le premier circuit 26 de l'échangeur de chaleur est une portion du circuit d'alimentation 28.

Le système d'échange de chaleur 20 comprend en outre une écope 34 pilotée, formée par un volet mobile destiné à autoriser ou interdire la circulation d'une partie du flux d'air secondaire dans la cavité 22 et en particulier à travers l'échangeur de chaleur 21. Le volet mobile 34 est agencé au niveau de l'entrée d'air 23 de la cavité 22. Plus précisément, le volet mobile 34 peut se déplacer entre une position d'ouverture dans laquelle le flux d'air est autorisé à circuler dans la cavité (et aussi dans le compartiment ou autour du carter inter-veine 18) et une position de fermeture dans laquelle le flux d'air n'est pas autorisé à circuler dans la cavité 22 (le flux d'air circule uniquement dans le compartiment ou autour du carte inter-veine (soit dans la veine secondaire 15).

De manière avantageuse, le volet mobile 34 est monté pivotant autour d'un axe 35 transversal à l'axe longitudinal X. Une liaison pivot est prévue entre le volet mobile 34 et une portion de la paroi radialement interne 25 du carter inter-veine 18. Le volet mobile 34 présente également des dimensions correspondant sensiblement à celles de l'entrée d'air 23. En particulier le volet mobile 34 s'étend sur un secteur angulaire de l'ordre de 30° suivant la direction circonférentielle.

Comme cela est visible sur la figure 3, le système d'échange de chaleur 20 comprend un dispositif de contrôle 36 qui est configuré de manière à agir (interdire ou autoriser) sur la circulation du premier fluide (huile), vers l'échangeur de chaleur 2 (soit dans le premier circuit d'huile) et simultanément sur la position du volet mobile 34. Plus précisément encore, le dispositif de contrôle 36 est configuré pour associer la position de fermeture du volet mobile 34 avec une conduite de dérivation 37 contournant l'échangeur de chaleur 21 pour éviter une élévation de température dans celui-ci et dans la cavité 22. Le dispositif de contrôle 36 est agencé dans le circuit d'alimentation 28.

En référence à la figure 4, le dispositif de contrôle 36 se présente sous la forme d'une vanne de distribution qui comprend un corps 38 pourvu d'un logement 39 ou alésage et d'un organe mobile 40 se déplaçant dans le logement 39 entre une première position autorisant la circulation d'huile vers l'échangeur de chaleur 21 et une deuxième position autorisant la circulation d'huile dans la conduite de dérivation 37. En particulier, dans la deuxième position, l'huile n'est pas autorisée à circuler vers l'échangeur de chaleur 21. L'organe mobile 40 est destiné à entraîner ou actionner le déplacement du volet mobile 34. Pour cela, l'organe mobile 40 comprend une tige d'actionnement 41 dont l'extrémité libre 42 est fixée de manière articulée au volet mobile. La tige d'actionnement 41 s'étend au moins en partie à l'extérieur du corps 38. De la sorte, lors du déplacement de l'organe mobile 40 entre sa première position et sa deuxième position, ce dernier entraîne le déplacement du volet mobile 34 dans la position d'ouverture ou de fermeture. Suivant un exemple de réalisation non représenté, l'extrémité libre 42 de la tige d'actionnement 41 est articulée directement avec le volet mobile. Alternativement et tel qu'illustré sur la figure 3, une biellette 43 comprend une première extrémité 43a qui est fixée de manière articulée au volet mobile 34 et une deuxième extrémité 43b qui est fixée à l'extrémité libre 42 de la tige d'actionnement 41 de l'organe mobile 40. Suivant encore une autre alternative (non représentée), une biellette et une pièce mobile sont disposées entre le volet mobile 34 et l'organe mobile 40 pour réaliser le changement de position du volet mobile. En particulier, la première extrémité de la biellette est articulée avec le volet mobile 34 et la deuxième extrémité de la biellette est articulée à la pièce mobile. Cette dernière, en forme d'équerre par exemple, pivote autour d'un axe transversal à l'axe longitudinal de la turbomachine. La pièce mobile est également articulée à l'extrémité libre de la tige d'actionnement 41.

En référence aux figures 4 à 5, le dispositif de contrôle 36 est destiné à être relié d'une part à une première conduite d'alimentation 49 reliée au premier circuit 26 de l'échangeur de chaleur 21 et d'autre part, à la conduite de dérivation 37 qui contourne l'échangeur de chaleur 21. En particulier, le corps 38 comprend un premier orifice d'entrée 44, un deuxième orifice d'entrée 45, un premier orifice de sortie 46 et un deuxième orifice sortie 47 débouchant dans le logement 39. Les premier et deuxième orifices d'entrée 44, 45 sont destinés à être reliés au circuit d'alimentation 28. Le premier orifice de sortie 41 est destiné à être reliée au premier circuit 26 de l'échangeur de chaleur 21. L'organe mobile 40 définit dans le corps 38 une première chambre 48a et une deuxième chambre 48b qui sont séparées de manière hermétique. Le volume des chambres 48a, 48b varie en fonction du déplacement de l'organe mobile 40 à l'intérieur du corps 38. Dans le présent exemple, l'organe mobile 40 se déplace suivant une translation. Comme cela est illustré, le premier orifice d'entrée 44 est en communication fluidique avec la première chambre 48a. Le premier orifice de sortie 46 est aussi en communication fluidique avec la première chambre 48a. La première conduite d'alimentation 49 est agencée sur le circuit d'alimentation 28 de manière à relier le premier circuit 26 de l'échangeur 21 au dispositif de contrôle 36. La conduite 49 comprend une entrée 49a reliée au premier orifice de sortie 46 du dispositif 36 et une sortie 49b reliée à l'entrée 26b du premier circuit 26 de l'échangeur de chaleur 21.

Le deuxième orifice d'entrée 45 est en communication fluidique avec la deuxième chambre 48b. Le deuxième orifice de sortie 47 est aussi en communication fluidique avec la deuxième chambre 48b. La conduite de dérivation 37 comprend une entrée 37a qui est reliée au deuxième orifice de sortie 47 du dispositif de contrôle 36. Cette conduite de dérivation 37 comprend également une sortie 37b qui est agencée en aval de l'échangeur de chaleur (en aval de la sortie 26c du premier circuit 26). Plus précisément encore, la sortie 37b est agencée entre le réservoir 29a et l'échangeur de chaleur 21. La sortie 26c du premier circuit 26 est quant à elle couplée à une deuxième conduite 50 du circuit d'alimentation 28.

Le déplacement du volet mobile 34 est couplé à la circulation de fluide dans la conduite de dérivation de manière à éviter la surchauffe de la cavité 22 dans laquelle est agencé l'échangeur de chaleur 21 et aussi à la circulation en fluide dans l'échangeur de chaleur 21 lui-même (dans le premier circuit). A cet effet, lorsque l'organe mobile 40 occupe la première position (circulation d'huile dans le premier circuit 26) alors le volet mobile 34 se trouve dans la position d'ouverture. Dans ce cas, l'huile qui circule dans l'échangeur de chaleur 21 est refroidie par une partie du flux d'air secondaire traversant l'échangeur de chaleur 21. Dans cette position comme illustré sur la figure 4, l'organe mobile 40 obture le deuxième orifice d'entrée 45 et aussi le deuxième orifice de sortie 47.

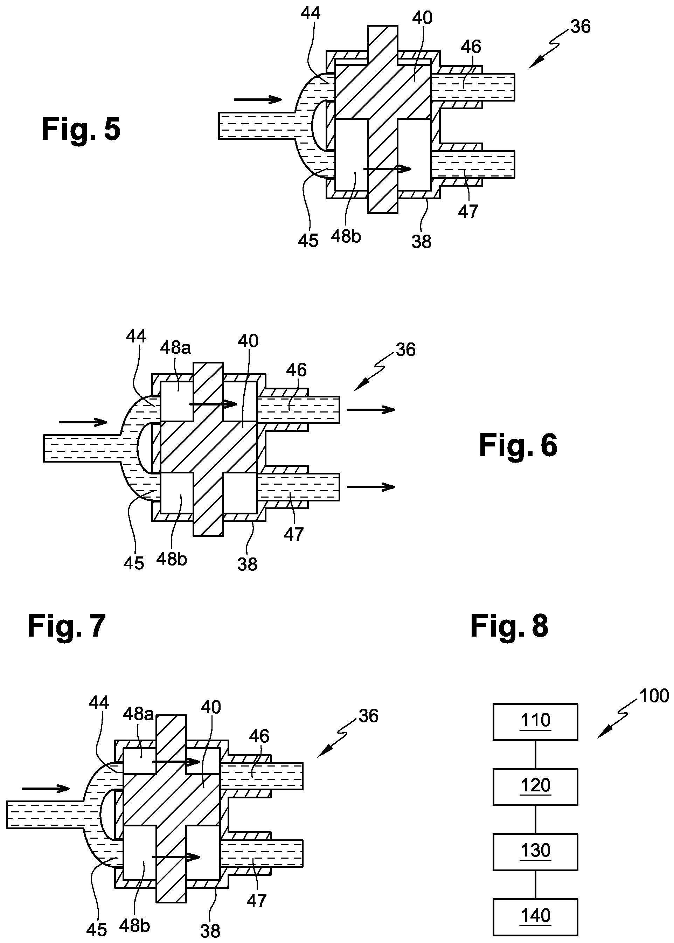

A l'inverse, lorsque l'organe de mobile 40 du dispositif de contrôle 36 occupe la deuxième position (circulation d'huile dans la conduite de dérivation 37 alors le volet mobile 34 se trouve dans la position de fermeture. Il n'y a pas de prélèvement d'une partie du flux d'air secondaire dans la veine secondaire 15 ce qui optimise les performances de la turbomachine, et l'huile chaude qui provient des organes et/ou équipements à lubrifier et/ou à refroidir est redirigée vers le réservoir 29a de manière à éviter une élévation de la température dans l'échangeur de chaleur 21 ainsi que dans la cavité 22. Dans cette position, comme illustré sur la figure 5, l'organe mobile 40 obture le premier orifice d'entrée 44 et aussi le premier orifice de sortie 46.

De manière avantageuse, le système d'échange de chaleur 20 comprend des moyens de mesure 51 d'au moins un paramètre déterminé du premier fluide (huile) dans la turbomachine 1. Les moyens de mesure 51 sont reliés à une unité électronique de commande 60 de la turbomachine. Cette unité électronique de commande 60 est configurée pour piloter le passage d'une position à une autre de l'organe mobile 40 du dispositif de contrôle 36 en fonction du paramètre déterminé. Les moyens de mesure 51 du paramètre déterminé peuvent être un capteur, une sonde, un thermocouple ou tout élément apte à relever un paramètre déterminé dans la turbomachine. La température de l'huile en sortie de l'échangeur de chaleur 21 est un exemple de paramètre déterminé. Une mesure de la viscosité de l'huile est également envisageable. Comme illustré sur la figure 3, les moyens de mesure 51 sont installés sur la conduite 50 du circuit d'alimentation d'huile 28 et en aval de l'échangeur de chaleur 21. L'unité électronique de commande 60 délivre un ordre de commande au dispositif de contrôle 36 lorsque la température mesurée est supérieure, inférieure ou atteint au moins un seuil de température pour passer d'une position à une autre. Avantageusement, mais non limitativement, le seuil de température est compris entre 20°C et 100°C. Le seuil de température est enregistré dans une mémoire (non représentée) de l'unité électronique de contrôle 60. La première position de l'organe mobile (position d'ouverture du volet mobile) est considérée comme étant une position par défaut. C'est-à-dire que lors du démarrage de la turbomachine, le volet mobile 34 est ouvert ou s'ouvre et de l'huile circule vers l'échangeur de chaleur 21. Lorsque la température mesurée atteint ou est inférieur au seuil de température, l'organe mobile 40 bascule dans la deuxième position pour fermer le volet mobile 34 et autoriser la circulation d'huile vers la conduite de dérivation 37.

Suivant une alternative, plusieurs seuils de température sont enregistrés dans la mémoire de l'unité électronique de commande 60. Un premier seuil de température est associé à la première position de l'organe mobile 40 ou de la position d'ouverture du volet mobile 34. Un deuxième seuil est associé à la deuxième position de l'organe mobile 34 ou de la position de fermeture du volet mobile 34. Le premier seuil de température peut être de 20 °C et le deuxième seuil de température peut être de 100°C.

Suivant un mode de réalisation illustré sur la figure 6, l'organe mobile 40 du dispositif de contrôle 36 peut occuper une position intermédiaire. Dans ce cas le volet mobile 34 présente un angle d'ouverture intermédiaire dans une position intermédiaire également. Dans le présent exemple, la position intermédiaire est située entre la première position et la deuxième position. Le dispositif de contrôle 36 est configuré de manière à avoir un débit d'huile en sortie de celui-ci qui est propre à chaque position du volet mobile. En particulier, lorsque le volet mobile 34 est dans la position d'ouverture, tout le débit d'huile circule vers l'échangeur de chaleur 21. Lorsque le volet mobile 34 est dans position de fermeture tout le débit d'huile circule vers la conduite de dérivation 37. Dans la position intermédiaire, le dispositif de contrôle 36 autorise, simultanément, une circulation d'huile vers l'échangeur de chaleur 21 et vers la conduite de dérivation 37. Le débit d'huile vers l'échangeur de chaleur 21 est identique au débit d'huile vers la conduite de dérivation 37. Le volet mobile 34 occupe également sa position intermédiaire située entre la position d'ouverture et la position de fermeture. Les premier et deuxième orifices d'entrée 44,45 et les premier et deuxième orifices de sortie 46, 47 ne sont pas obturés. De même, la position intermédiaire du dispositif de contrôle 36 est associée ici à un troisième seuil de température. Ce dernier est compris entre le premier seuil et le deuxième seuil de température. De manière avantageuse, les valeurs des différents seuils sont éloignées ou respectent une certaine hystérésis pour éviter d'avoir des battements (oscillations) du volet mobile 34. A titre d'exemple, le troisième seuil de température est de 80°C.

Suivant une alternative représentée sur la figure 7, lorsque le dispositif de contrôle 36 bascule dans la position intermédiaire, le débit d'huile circulant vers l'échangeur de chaleur 21 est inférieur au débit d'huile vers la conduite de dérivation 37. Le débit d'huile vers l'échangeur de chaleur 21 peut correspondre à 25% du débit total d'huile entrant dans le dispositif de contrôle 36 tandis que le débit d'huile vers la conduite de dérivation 37 peut correspondre à 75% du débit total. A cet effet, le premier orifice d'entrée 44 et le premier orifice de sortie 46 sont partiellement obturés. Bien entendu, le pourcentage du débit distribué peut être différent.

De manière avantageuse, mais non limitativement, le dispositif de contrôle 36 est un distributeur hydraulique qui est monté sur le circuit d'alimentation 28 de la turbomachine. Le distributeur comprend un tiroir faisant office d'organe mobile.

Nous allons présenter un exemple de procédé de régulation 100 de la circulation de l'huile dans l'échangeur de chaleur 21 du système d'échange de chaleur 20 tel que décrit ci-dessus. Les étapes du procédé sont représentées sur la figure 8. Le procédé comprend dans un premier temps une étape de fourniture 110 d'un premier fluide (ici de l'huile) dans un circuit d'alimentation 28. Le procédé comprend également, préalablement ou postérieurement à l'étape 110, une étape d'agencement 120 de l'échangeur de chaleur 21 et d'un dispositif de contrôle 36 sur le circuit d'alimentation 28. Comme nous l'avons vu et en particulier sur la figure 3, le dispositif de contrôle 36 est disposé, suivant la circulation du premier fluide dans le circuit d'alimentation 28, entre l'échangeur de chaleur 21 et le réservoir 29a (ou source de fluide). Le procédé 100 comprend une étape de régulation ou de gestion 130 de manière différenciée (autoriser ou interdire) et simultanée de la circulation du flux d'air dans la cavité 22 et de la circulation du premier fluide vers l'échangeur de chaleur 21. L'étape de régulation 130 comprend une sous étape 131 de déplacement de l'organe mobile 40 dans la première position pour autoriser la circulation de l'huile vers le premier circuit 26 de l'échangeur de chaleur 21 (en passant par la conduite d'alimentation 49) ou dans la deuxième position pour interdire la circulation d'huile vers l'échangeur de chaleur 21. Dans la deuxième position, l'huile est redirigée vers le réservoir sans passer par l'échangeur de chaleur 21. Cette étape 130 comprend également une sous-étape d'actionnement 132 du volet mobile 34 qui est en fonction de la position de l'organe mobile 40. Dans la première position de l'organe mobile 40, le volet mobile 34 occupe la position d'ouverture pour autoriser la circulation du flux d'air dans la cavité 22. Et dans la deuxième position de l'organe mobile 40, le volet mobile 34 occupe la position de fermeture pour interdire la circulation du flux d'air dans la cavité. En particulier, lorsque le volet mobile 34 occupe la position d'ouverture, la conduite d'alimentation 49 est alimentée par le circuit d'alimentation 28 et lorsque le volet mobile 34 occupe la position de fermeture la conduite de dérivation 37 est alimentée par le circuit d'alimentation 28.

Le passage de la position de l'organe mobile 40 dépend d'un paramètre prédéterminé du premier fluide. Pour cela, le procédé 100 comprend également une étape de mesure 140 d'un paramètre déterminé (la température dans ou en sortie de l'échangeur de chaleur) du premier fluide pour réaliser la sous-étape de déplacement. A cet effet, les moyens de mesure 51 envoient des informations relatives à la température de l'huile en sortie de l'échangeur 21. Chaque température mesurée est comparée avec le ou les seuil(s) de température enregistré(s) dans la mémoire de l'unité électronique de commande 60. Lorsque la température mesurée atteint, est inférieure ou est supérieure à l'un des seuils de température, l'unité électronique de commande 60 envoie un ordre de commande au dispositif de contrôle 36. En particulier, l'ordre de commande pilote le déplacement de l'organe mobile 40 dans la première position, dans la deuxième position, dans son maintien en position ou éventuellement dans la position intermédiaire. A titre d'exemple, la température du premier fluide dans l'échangeur de chaleur, ou en sortie de l'échangeur de chaleur est mesurée de façon continue ou discrète, à intervalles réguliers. L'étape de régulation effectue, au moins avant une mesure consécutive de la température, une étape consistant à ce que lorsque la température mesurée est inférieure à au moins un seuil de température consigne, l'organe mobile 40 est piloté pour se déplacer dans la deuxième position de sorte à alimenter la conduite de dérivation 37 avec le premier fluide. L'étape de régulation peut effectuer, au moins avant une mesure consécutive de la température, une étape consistant à ce que lorsque la température mesurée est égale audit seuil de température consigne, l'organe mobile 40 est piloté pour se déplacer dans sa position précédente. L'étape de régulation peut effectuer, au moins avant une mesure consécutive de la température, une étape consistant à ce que lorsque la température mesurée est supérieure audit seuil de température consigne, l'organe mobile40 est piloté pour se déplacer dans la première position de sorte à alimenter la conduite d'alimentation 49 avec le premier fluide vers l'échangeur de chaleur.

Ainsi, la fermeture du volet mobile 34 et la circulation de l'huile dans la conduite de dérivation 37 (contournant l'échangeur de chaleur 21) permet de diminuer le cyclage thermique dans l'échangeur de chaleur et de baisser les pertes de charges dans le premier circuit d'huile. De telles diminutions permettent un gain d'une part, sur la durée de vie de l'échangeur de chaleur, et d'autre part, sur la performance et l'efficacité de celui-ci et aussi d'autres organes du circuit d'alimentation 28. De même, la température à supporter par la cavité 22 peut être pondérée de manière à obtenir des gains en masse sur les matériaux utilisés (par ex. composites), notamment pour les parois de la cavité 22 et celles de l'échangeur 21.

## Revendications

1. Système d'échange de chaleur (20) pour une turbomachine (1) d'aéronef comprenant :
- une cavité (22) comprenant une entrée d'air (23),
- un échangeur de chaleur (21) agencé dans la cavité (22), l'échangeur de chaleur (21) comprenant un premier circuit (26) dans lequel est apte à circuler un premier fluide fourni par un circuit d'alimentation (28) en fluide,
- un volet mobile (34) monté au niveau de l'entrée d'air (23) et se déplaçant entre une position d'ouverture autorisant la circulation du flux d'air dans la cavité (22) et une position de fermeture interdisant la circulation du flux d'air dans la cavité (22),
- un dispositif de contrôle (36) comprenant au moins un organe mobile (40) destiné à entraîner le déplacement du volet mobile (34),
**caractérisé en ce que** le dispositif de contrôle (36) est agencé dans le circuit d'alimentation (28) en fluide de l'échangeur de chaleur (21), et est configuré de manière à, simultanément, autoriser ou interdire la circulation du premier fluide vers l'échangeur de chaleur (21) et à agir sur la position d'ouverture ou de fermeture du volet mobile (34).

2. Système d'échange de chaleur (20) selon la revendication précédente, **caractérisé en ce que** le dispositif de contrôle (36) est destiné à être relié d'une part à une conduite d'alimentation (49) reliée au premier circuit (26) de l'échangeur de chaleur (21) et d'autre part à une conduite de dérivation (37) qui contourne l'échangeur de chaleur (21), ladite conduite d'alimentation (49) étant destinée à être alimentée par le circuit d'alimentation (28) lorsque le volet mobile (34) occupe la position d'ouverture et ladite conduite de dérivation (37) étant destinée à être alimentée par le circuit d'alimentation (28) lorsque le volet mobile (34) occupe la position de fermeture.

3. Système d'échange de chaleur (20) selon la revendication précédente, **caractérisé en ce que** l'organe mobile (40) se déplace entre :
- une première position autorisant la circulation du premier fluide vers l'échangeur de chaleur et dans laquelle le volet mobile (34) est dans la position d'ouverture, et
- une deuxième position autorisant la circulation du premier fluide vers la conduite de dérivation (37) et dans laquelle le volet mobile (34) est dans la position de fermeture.

4. Système d'échange de chaleur (20) selon l'une des revendications précédentes, **caractérisé en ce qu'**il comprend des moyens de mesure (51) d'au moins un paramètre déterminé du premier fluide en sortie de l'échangeur de chaleur (61), suivant le sens de circulation du premier fluide dans l'échangeur de chaleur (21), et qui sont aptes à être reliés à une unité électronique de commande (60), l'unité électronique de commande (60) étant configurée de manière à piloter le passage d'une position à une autre de l'organe mobile (40) en fonction du paramètre déterminé.

5. Système d'échange de chaleur (20) selon l'une des revendications 3 à 4, **caractérisé en ce que** le dispositif de contrôle (36) comprend un corps (38) pourvu d'un logement (39) dans lequel débouche un premier orifice d'entrée (44), un deuxième orifice d'entrée (45), un premier orifice de sortie (46) et un deuxième orifice de sortie (47), les premier et deuxième orifices d'entrée (44, 45) étant destinés à être reliés au circuit d'alimentation (28), le premier orifice de sortie (46) étant destiné à être relié au premier circuit (26) et le deuxième orifice de sortie (47) étant destiné à être relié à la conduite de dérivation (37), l'organe mobile (40) obturant le deuxième orifice de sortie (47) dans la première position et obturant le premier orifice de sortie (46) dans la deuxième position.

6. Système d'échange de chaleur (20) selon l'une quelconque des revendications précédentes, **caractérisé en ce que** l'organe mobile (40) est apte à occuper au moins une position intermédiaire dans laquelle le premier fluide est apte à circuler vers l'échangeur de chaleur (21) et vers la conduite de dérivation (37).

7. Module de turbomachine comprenant un compartiment (12, 13, 18) annulaire autour de l'axe longitudinal X, un circuit d'alimentation (28) en fluide et un système d'échange de chaleur (20) selon l'une quelconque des revendications précédentes, le compartiment comportant une paroi (25) annulaire qui guide au moins en partie un flux d'air et le système d'échange de chaleur (20) étant agencé dans le compartiment annulaire (12, 13, 18) et sur le circuit d'alimentation (28), l'entrée d'air (23) de la cavité (22) étant agencée dans la paroi (25) annulaire de manière à être en communication fluidique avec le compartiment annulaire.

8. Turbomachine (1) d'aéronef comprenant un module de turbomachine selon la revendication précédente ou un système d'échange de chaleur (20) selon l'une quelconque des revendications 1 à 6.

9. Procédé de régulation de la circulation d'un premier fluide dans un échangeur de chaleur (21) d'un système d'échange de chaleur (20) pour une turbomachine d'aéronef, l'échangeur de chaleur (21) étant agencé dans une cavité (22) du système d'échange de chaleur et la cavité (22) étant apte à être balayée par un flux d'air circulant depuis une entrée d'air (23) de la cavité (22), le procédé étant **caractérisé en ce qu'**il comprend :
- une étape de fourniture (110) d'un premier fluide dans un circuit d'alimentation (28) en fluide de la turbomachine,
- une étape d'agencement (120) de l'échangeur de chaleur (21) et d'un dispositif de contrôle (36) sur le circuit d'alimentation (28), le dispositif de contrôle (36) comprenant un organe mobile (34) destiné à entraîner le déplacement d'un volet mobile (34), monté au niveau de l'entrée d'air (23), entre une position d'ouverture autorisant la circulation du flux d'air dans la cavité (22) et une position de fermeture interdisant la circulation du flux d'air dans la cavité (22), et
- une étape de régulation (130) de manière à, simultanément, autoriser ou interdire la circulation du flux d'air dans la cavité (22) et la circulation du premier fluide vers l'échangeur de chaleur et agir sur la position d'ouverture ou de fermeture du volet mobile (34).

10. Procédé selon la revendication précédente, **caractérisé en ce que** l'étape de régulation (130) comprend :
- une sous étape de déplacement (131) de l'organe mobile (40) dans la première position pour autoriser la circulation de l'huile vers le premier circuit (26) de l'échangeur de chaleur (21) ou dans la deuxième position pour autoriser la circulation d'huile vers le conduit de dérivation, et
- une sous étape d'actionnement (132) du volet mobile (34) dans la position d'ouverture autorisant la circulation du flux d'air dans la cavité (22) et la position de fermeture interdisant la circulation du flux d'air dans la cavité, la position du volet mobile (34) étant fonction de la position de l'organe mobile.

11. Procédé selon la revendication précédente, **caractérisé en ce qu'**il comprend une étape de mesure (140) d'un paramètre déterminé du premier fluide et **en ce que** l'étape de déplacement (131) est réalisée en fonction au moins de l'atteinte d'un seuil dudit paramètre prédéterminé.

12. Procédé selon la revendication précédente, **caractérisé en ce que** le paramètre déterminé mesuré est une température représentative de la température du premier fluide dans l'échangeur de chaleur, mesurée de façon continue ou discrète à intervalles réguliers, et **en ce qu'**à chaque mesure l'étape de régulation (130) effectue au moins l'une des étapes suivantes, avant une mesure consécutive de la température :
- lorsque la température mesurée est inférieure à au moins un seuil de température consigne, l'organe mobile (40) est piloté pour se déplacer dans la deuxième position de sorte à alimenter la conduite de dérivation (37) avec le premier fluide,
- lorsque la température mesurée est égale audit seuil de température consigne, l'organe mobile (40) est piloté pour se déplacer dans sa position précédente, et/ou
- lorsque la température mesurée est supérieure audit seuil de température consigne, l'organe mobile (40) est piloté pour se déplacer dans la première position de sorte à alimenter la conduite d'alimentation (49) avec le premier fluide vers l'échangeur de chaleur (21).

## Patentansprüche

1. Wärmetauschsystem (20) für ein Turbotriebwerk (1) eines Luftfahrzeugs, umfassend:
- einen Hohlraum (22), der einen Lufteinlass (23) umfasst,
- einen Wärmetauscher (21), der in dem Hohlraum (22) angeordnet ist, wobei der Wärmetauscher (21) einen ersten Kreislauf (26) umfasst, in dem ein erstes Fluid, das von einem Fluidversorgungskreislauf (28) bereitgestellt wird, zu zirkulieren imstande ist,
- eine bewegliche Klappe (34), die im Bereich des Lufteinlasses (23) montiert ist, und sich zwischen einer Öffnungsposition, welche die Zirkulation des Luftstroms in dem Hohlraum (22) erlaubt, und einer Schließposition, welche die Zirkulation des Luftstroms in dem Hohlraum (22) untersagt, bewegt,
- eine Kontrollvorrichtung (36), die mindestens ein bewegliches Organ (40) umfasst, das dazu bestimmt ist, die Bewegung der beweglichen Klappe (34) anzutreiben,
**dadurch gekennzeichnet, dass** die Kontrollvorrichtung (36) in dem Fluidversorgungskreislauf (28) des Wärmetauschers (21) angeordnet ist, und konfiguriert ist, um gleichzeitig die Zirkulation des ersten Fluids zum Wärmetauscher (21) zu erlauben oder zu untersagen, und auf die Öffnungs- oder Schließposition der beweglichen Klappe (34) einzuwirken.

2. Wärmetauschsystem (20) nach dem vorstehenden Anspruch, **dadurch gekennzeichnet, dass** die Kontrollvorrichtung (36) dazu bestimmt ist, einerseits mit einer Versorgungsleitung (49), die mit dem ersten Kreislauf (26) der Wärmetauschers (21) verbunden ist, und andererseits mit einer Umgehungsleitung (37) verbunden zu werden, die den Wärmetauscher (21) umgeht, wobei die Versorgungsleitung (49) dazu bestimmt ist, durch den Versorgungskreislauf (28) versorgt zu werden, wenn die bewegliche Klappe (34)die Öffnungsposition einnimmt, und die Umgehungsleitung (37) dazu bestimmt ist, durch den Versorgungskreislauf (28) versorgt zu werden, wenn die bewegliche Klappe (34) die Schließposition einnimmt.

3. Wärmetauschsystem (20) nach dem vorstehenden Anspruch, **dadurch gekennzeichnet, dass** sich das bewegliche Organ (40) bewegt zwischen:
- einer ersten Position, welche die Zirkulation des ersten Fluids zum Wärmetauscher erlaubt, und in der sich die bewegliche Klappe (34) in der Öffnungsposition befindet, und
- einer zweiten Position, welche die Zirkulation des ersten Fluids zur Umgehungsleitung (37) erlaubt, und in der sich die bewegliche Klappe (34) in der Schließposition befindet.

4. Wärmetauschsystem (20) nach einem der vorstehenden Ansprüche, **dadurch gekennzeichnet, dass** es Messmittel (51) für mindestens einen bestimmten Parameter des ersten Fluids am Ausgang des Wärmetauschers (61), der Zirkulationsrichtung des ersten Fluids im Wärmetauscher (21) folgend umfasst, und die imstande sind, mit einer elektronischen Steuereinheit (60) verbunden zu werden, wobei die elektronische Steuereinheit (60) konfiguriert ist, um den Übergang von einer Position zu einer anderen des beweglichen Organs (40) je nach dem bestimmten Parameter anzusteuern.

5. Wärmetauschsystem (20) nach einem der Ansprüche 3 bis 4, **dadurch gekennzeichnet, dass** die Kontrollvorrichtung (36) einen Körper (38) umfasst, der mit einem Gehäuse (39) versehen ist, in das eine erste Eingangsöffnung (44), eine zweite Eingangsöffnung (45), eine erste Ausgangsöffnung (46) und eine zweite Ausgangsöffnung (47) münden, wobei die erste und zweite Eingangsöffnung (44, 45) dazu bestimmt sind, mit dem Versorgungskreislauf (28) verbunden zu werden, die erste Ausgangsöffnung (46) dazu bestimmt ist, mit dem ersten Kreislauf (26) verbunden zu werden,und die zweite Ausgangsöffnung (47) dazu bestimmt ist, mit der Umgehungsleitung (37) verbunden zu werden, wobei das bewegliche Organ (40) die zweite Ausgangsöffnung (47) in der ersten Position verschließt, und die erste Ausgangsöffnung (46) in der zweiten Position verschließt.

6. Wärmetauschsystem (20) nach einem der vorstehenden Ansprüche, **dadurch gekennzeichnet, dass** das bewegliche Organ (40) imstande ist, mindestens eine Zwischenposition einzunehmen, in der das erste Fluid imstande ist, zum Wärmetauscher (21) und zur Umgehungsleitung (37) zu zirkulieren.

7. Turbotriebwerksmodul, das ein ringförmiges Fach (12,13,18) um die Längsachse X herum, eine Fluidversorgungsleitung (28) und eine Wärmetauschsystem (20) nach einem der vorstehenden Ansprüche umfasst, wobei das Fach eine ringförmige Wand (25) beinhaltet, die mindestens teilweise einen Luftstrom leitet, und das Wärmetauschsystem (20) in dem ringförmigen Fach (12, 13, 18) und auf dem Versorgungskreislauf (28) angeordnet ist, der Lufteinlass (23) des Hohlraums (22) in der ringförmigen Wand (25) angeordnet ist, um in strömungstechnischer Kommunikation mit dem ringförmigen Fach zu sein.

8. Turbotriebwerk (1) eines Luftfahrzeugs, das ein Turbotriebwerksmodul nach dem vorstehenden Anspruch oder ein Wärmetauschsystem (20) nach einem der Ansprüche 1 bis 6 umfasst.

9. Verfahren zum Regeln der Zirkulation eines ersten Fluids in einem Wärmetauscher (21) eines Wärmetauschsystems (20) für ein Turbotriebwerk eines Luftfahrzeugs, wobei der Wärmetauscher (21) in einem Hohlraum (22) des Wärmetauschsystems angeordnet ist und der Hohlraum (22) imstande ist, von einem Luftstrom durchzogen zu werden, der vom Lufteinlass (23) des Hohlraums (22) her zirkuliert, wobei das Verfahren **dadurch gekennzeichnet ist, dass** es umfasst:
- einen Schritt zum Bereitstellen (110) eines ersten Fluids in einem Fluidversorgungskreislauf (28) des Turbotriebwerks,
- einen Schritt zum Anordnen (120) des Wärmetauschers (21 ) und einer Kontrollvorrichtung (36) auf dem Versorgungskreislauf (28), wobei die Kontrollvorrichtung (36) ein bewegliches Organ (34) umfasst, das dazu bestimmt ist, die Bewegung einer beweglichen Klappe (34), die im Bereich des Lufteinlasses (23) montiert ist, zwischen einer Öffnungsposition, welche die Zirkulation des Luftstroms in dem Hohlraum (22) erlaubt, und einer Schließposition, welche die Zirkulation des Luftstroms in dem Hohlraum(22) untersagt, anzutreiben, und
- einen Schritt zum Regeln (130), um gleichzeitig die Zirkulation des Luftstroms in dem Hohlraum (22) und die Zirkulation des ersten Fluids zum Wärmetauscher zu erlauben oder zu untersagen, und auf die Öffnungs- oder Schließposition der beweglichen Klappe (34) einzuwirken.

10. Verfahren nach dem vorstehenden Anspruch, **dadurch gekennzeichnet, dass** der Schritt zum Regeln (130) umfasst:
- einen Teilschritt zum Bewegen (131) des beweglichen Organs (40) in die erste Position, um die Zirkulation des Öls zum ersten Kreislauf (26) des Wärmetauschers (21) oder in die zweite Position zu erlauben, um die Zirkulation von Öl zur Umgehungsleitung zu erlauben, und
- einen Teilschritt zum Betätigen (132) der beweglichen Klappe (34) in die Öffnungsposition, welche die Zirkulation des Luftstroms in dem Hohlraum (22) erlaubt, und die Schließposition, welche die Zirkulation des Luftstroms in dem Hohlraum untersagt, wobei die Position der beweglichen Klappe (34) von der Position des beweglichen Organs abhängig ist.

11. Verfahren nach dem vorstehenden Anspruch, **dadurch gekennzeichnet, dass** es einen Schritt zum Messen (140) eines bestimmten Parameters des ersten Fluids umfasst, und dadurch, dass der Schritt zum Bewegen (131) in Abhängigkeit von mindestens dem Erreichen einer Schwelle des vorbestimmten Parameters durchgeführt wird.

12. Verfahren nach dem vorstehenden Anspruch, **dadurch gekennzeichnet, dass** der gemessene bestimmte Parameter eine Temperatur ist, die repräsentativ für die Temperatur des ersten Fluids in dem Wärmetauscher ist, die kontinuierlich oder diskret in regelmäßigen Intervallen gemessen wird, und dadurch, dass bei jeder Messung der Schritt zum Regeln (130) mindestens einen der folgenden Schritte vor einer folgenden Messung der Temperatur durchführt:
- wenn die gemessene Temperatur geringer als mindestens eine Solltemperaturschwelle ist, wird das bewegliche Organ (40) angesteuert, um sich in die zweite Position zu bewegen, um die Umgehungsleitung (37) mit dem ersten Fluid zu versorgen,
- wenn die gemessene Temperatur gleich der Solltemperaturschwelle ist, wird das bewegliche Organ (40) angesteuert, um sich in seine vorherige Position zu bewegen, und/oder
- wenn die gemessene Temperatur höher als die Solltemperaturschwelle ist, wird das bewegliche Organ (40) angesteuert, um sich in die erste Position zu bewegen, um die Versorgungsleitung (49) mit dem ersten Fluid zum Wärmetauscher (21) zu versorgen.

## Claims

1. A heat exchange system (20) for an aircraft turbine engine (1) comprising:
- a cavity (22) comprising an air intake (23),
- a heat exchanger (21) arranged in the cavity (22), the heat exchanger (21) comprising a first circuit (26) through which a first fluid provided by a fluid supply circuit (28) is able to circulate,
- a movable flap (34) mounted at the level of the air intake (23) and displacing between an opening position allowing the circulation of the airflow into the cavity (22) and a closing position preventing the circulation of the airflow into the cavity (22),
- a control device (36) comprising at least one movable member (40) intended to cause the displacement of the movable flap (34),
**characterised in that** the control device (36) is arranged in the fluid supply circuit (28) supplying fluid to the heat exchanger (21), and is configured so as, simultaneously, to allow or prevent the circulation of the first fluid towards the heat exchanger (21) and to act on the opening or closing position of the movable flap (34).

2. Heat exchange system (20) according to the preceding claim, **characterised in that** the control device (36) is intended to be connected on the one hand to a supply conduit (49) connected to the first circuit (26) of the heat exchanger (21) and on the other hand to a bypass conduit (37) which bypasses the heat exchanger (21), said supply conduit (49) being intended to be supplied by the supply circuit (28) when the movable flap (34) occupies the opening position and said bypass conduit (37) being intended to be supplied by the supply circuit (28) when the movable flap (34) occupies the closing position.

3. Heat exchange system (20) according to the preceding claim, **characterised in that** the movable member (40) displaces between:
- a first position allowing the circulation of the first fluid towards the heat exchanger and in which the movable flap (34) is in the opening position, and
- a second position allowing the circulation of the first fluid towards the bypass conduit (37) and in which the movable flap (34) is in the closing position.

4. Heat exchange system (20) according to one of the preceding claims, **characterised in that** it comprises means (51) for measuring at least one determined parameter of the first fluid at the outlet of the heat exchanger (61), depending on the circulation orientation of the first fluid in the heat exchanger (21), and which are capable of being connected to an electronic control unit (60), the electronic control unit (60) being configured so as to drive the passage from one position to another of the movable member (40) as a function of the determined parameter.

5. Heat exchange system (20) according to one of claims 3 to 4, **characterised in that** the control device (36) comprises a body (38) provided with a housing (39) into which a first inlet orifice (44), a second inlet orifice (45), a first outlet orifice (46) and a second outlet orifice (47) open, the first and second inlet orifices (44, 45) being intended to be connected to the supply circuit (28), the first outlet orifice (46) being intended to be connected to the first circuit (26) and the second outlet orifice (47) being intended to be connected to the bypass conduit (37), the movable member (40) sealing the second outlet orifice (47) in the first position and sealing the first outlet orifice (46) in the second position.

6. Heat exchange system (20) according to any one of the preceding claims, **characterised in that** the movable member (40) is adapted to occupy at least one intermediate position in which the first fluid is adapted to circulate towards the heat exchanger (21) and towards the bypass conduit (37).

7. A turbine engine module comprising an annular compartment (12, 13, 18) around the longitudinal axis X, a fluid supply circuit (28) and a heat exchange system (20) according to any of the preceding claims, the compartment comprising an annular wall (25) which at least partly guides an airflow and the heat exchange system (20) being arranged in the annular compartment (12, 13, 18) and on the supply circuit (28), the air intake (23) of the cavity (22) being arranged in the annular wall (25) so as to be in fluidic communication with the annular compartment.

8. An aircraft turbine engine (1) comprising a turbine engine module according to the preceding claim or a heat exchange system (20) according to any of claims 1 to 6.

9. A method for regulating the circulation of a first fluid through a heat exchanger (21) of a heat exchange system (20) for an aircraft turbine engine, the heat exchanger (21) being arranged in a cavity (22) of the heat exchange system and the cavity (22) being capable of being swept by an airflow circulating from an air intake (23) of the cavity (22), the method being **characterised in that** it comprises:
- a step of providing (110) a first fluid into a fluid supply circuit (28) of the turbine engine,
- a step of arranging (120) the heat exchanger (21) and a control device (36) on the supply circuit (28), the control device (36) comprising a movable member (34) intended to cause the displacement of a movable flap (34), mounted at the level of the air intake (23), between an opening position allowing the circulation of the airflow in the cavity (22) and a closing position preventing the circulation of the airflow in the cavity (22); and
- a step of regulating (130) so as to simultaneously allow or prevent the circulation of the airflow in the cavity (22) and the circulation of the first fluid towards the heat exchanger and to act on the opening or closing position of the movable flap (34).

10. Method according to the preceding claim, **characterised in that** the regulation step (130) comprises:
- a sub-step of displacing (131) the movable member (40) to the first position to allow the oil to circulate towards the first circuit (26) of the heat exchanger (21) or to the second position to allow the oil to circulate towards the bypass conduit, and
- a sub-step of actuating (132) the movable flap (34) in the opening position allowing the airflow to circulate in the cavity (22) and the closing position preventing the airflow from circulating in the cavity, the position of the movable flap (34) being a function of the position of the movable member.

11. Method according to the preceding claim, **characterised in that** it comprises a step of measuring (140) a determined parameter of the first fluid and **in that** the displacement step (131) is carried out as a function of at least the reaching of a threshold of said predetermined parameter.

12. Method according to the preceding claim, **characterised in that** the determined parameter measured is a temperature representative of the temperature of the first fluid in the heat exchanger, measured continuously or discretely at regular intervals, and **in that** at each measurement the regulation step (130) performs at least one of the following steps, prior to a subsequent measurement of the temperature:
- when the measured temperature is below at least one setpoint temperature threshold, the movable member (40) is driven to displace to the second position so as to supply the bypass conduit (37) with the first fluid,
- when the measured temperature is equal to said setpoint temperature threshold, the movable member (40) is driven to displace to its previous position, and/or
- when the measured temperature is above said setpoint temperature threshold, the movable member (40) is driven to displace to the first position so as to supply the supply conduit (49) with the first fluid towards the heat exchanger (21).
